# EUROPEAN PATENT APPLICATION

(11) **EP 1 251 049 A2**
(43) Date of publication of application: **23.10.2002**
(21) Application number: 02008559.3
(22) Date of filing: 16.04.2002
(51) Int. Cl.: B60S 5/04, F17C 7/04

(54) **Pressurized-gas supply unit**

(30) Priority: 18.04.2001 IT BO20010232
(71) Applicant: STAMPOTECNICA S.r.l., 42015 Correggio (IT)
(72) Inventor: Gabrielli, Antonio, 42015 Correggio (IT); Parmigiani, Ivano, 42015 Correggio (IT)
(74) Representative: Jorio, Paolo

(57) **Abstract**

A pressurized-gas supply unit has a feed valve (11) connectable to a pressurized-gas source (4), and which operates in pulsating manner to feed pressurized gas in pulses to a user device (2); and a safety valve (12) connected pneumatically to the feed valve (11) to cut off pressurized-gas supply to the user device (2) as a function of the duration of each feed pulse.

## Description

The present invention relates to a pressurized-gas supply unit.

More specifically, the present invention relates to a unit for supplying compressed air to a tire, to which the following description refers purely by way of example.

To assemble and/or inflate tires, a compressed-air supply unit is used, which is located along a pneumatic circuit extending between a compressed-air source and the tire. The unit comprises a feed valve for receiving compressed air from the source at a relatively high supply pressure, and feeding the compressed air into the tire in pulsating manner, i.e. in a succession of feed pulses - during which the feed valve opens to feed compressed air into the tire - alternating with corresponding feed stops - during which the feed valve closes to cut off compressed-air supply to the tire.

When the pressure in the tire reaches a given value, the feed valve is closed, and assembly and/or inflation of the tire is terminated.

Known supply units of the above type have several drawbacks, the main one being that, in the event of a fault on the feed valve, i.e. in the event a feed pulse exceeds a given duration, the tire pressure may substantially equal the supply pressure, thus endangering the safety of the operator.

It is an object of the present invention to provide a pressurized-gas supply unit designed to eliminate the aforementioned drawbacks.

According to the present invention, there is provided a unit for supplying a pressurized gas to a user device, in particular a tire; the unit comprising a feed valve connectable to a source of said pressurized gas, and which operates in pulsating manner to feed the pressurized gas in pulses to said user device; and being characterized by also comprising a safety valve connected pneumatically to said feed valve to cut off supply of said pressurized gas to said user device as a function of the duration of each feed pulse.

A non-limiting embodiment of the present invention will be described by way of example with reference to the accompanying drawings, in which:
Figure 1 shows a longitudinal section of a preferred embodiment of the supply unit according to the present invention;
Figure 2 shows, schematically, the Figure 1 unit connected to a tire assembly and/or inflation system;
Figures 3 and 4 show longitudinal sections of a first detail in Figure 1 in two different operating positions from that in Figure 1;
Figure 5 shows a plan view of a second detail in Figure 1;
Figure 6 shows a section along line VI-VI of the Figure 5 detail in a different operating position from that in Figure 1;
Figure 7 shows a section along line VII-VII in Figure 5;
Figure 8 shows the same view as in Figure 7, of a variation of the Figure 5 detail.

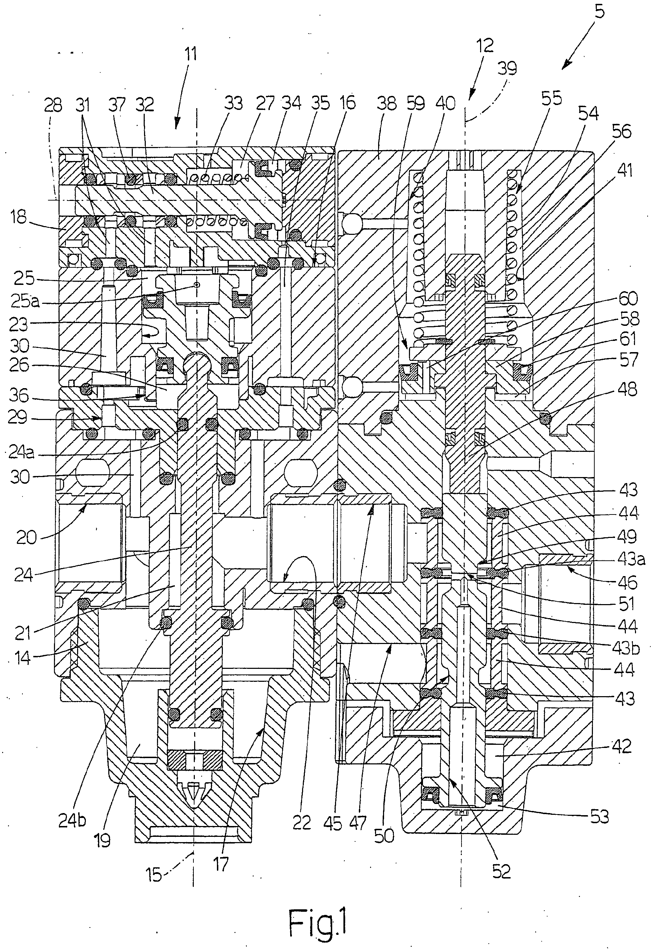

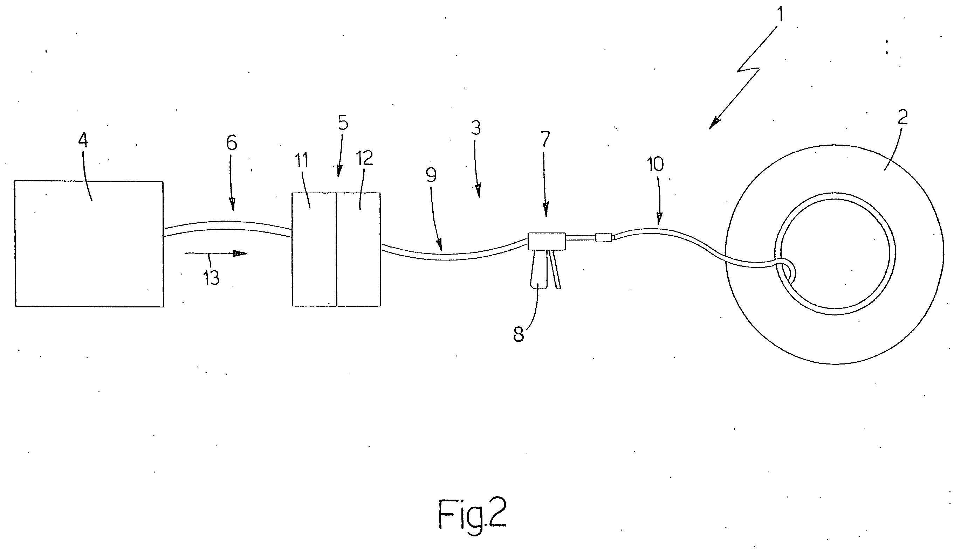

With reference to Figures 1 and 2, number 1 indicates as a whole a system for assembling and/or inflating tires 2, and comprising a pneumatic circuit 3 extending between a known source 4 for supplying pressurized gas - in the example shown, compressed air - at a given supply pressure, and a tire 2.

System 1 also comprises a compressed-air supply unit 5 located along circuit 3 and defining, along circuit 3, two portions 6, 7 extending between source 4 and unit 5 and between unit 5 and tire 2 respectively; and a known compressed-air gun 8 located along portion 7 and defining, along portion 7, two portions 9, 10 arranged in series.

Unit 5 comprises a known feed valve 11 and a safety valve 12 located successively along circuit 3 in that order and in a given feed direction 13.

Valve 11 comprises a substantially parallelepiped-shaped, substantially rectangular-section casing 14, which has a vertical longitudinal axis 15, is defined at the top by a substantially flat surface 16 crosswise to axis 15, and has a longitudinal cavity 17, which is substantially coaxial with axis 15 with its concavity facing upwards, opens outwards at surface 16, and is closed by a plate 18 contacting surface 16.

Cavity 17 comprises a wide bottom portion 19 communicating pneumatically with an inlet hole 20 formed radially through casing 14 to allow compressed air into valve 11; a narrow intermediate portion 21 communicating pneumatically with an outlet hole 22 formed radially through casing 14 to allow compressed air out of valve 11; and a wide top portion 23.

Valve 11 also comprises a slide 24, which is substantially coaxial with axis 15, engages cavity 17 in sliding manner, and is activated, as explained in detail later on, to open or close circuit 3. Slide 24 is shaped to define, inside portion 23, two variable-volume chambers 25, 26; chamber 25 is substantially cylindrical, is coaxial with axis 15, and is closed at the top by plate 18; and chamber 26 is substantially annular, is coaxial with axis 15, and is isolated pneumatically from portion 21, and therefore from hole 22, by the interposition of a sealing ring 24a fitted to slide 24.

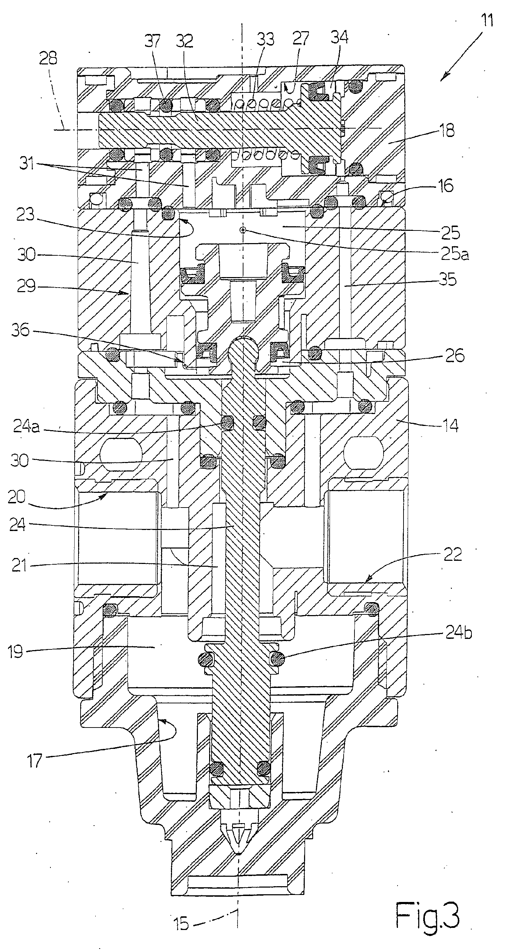

Plate 18 comprises a cavity 27, which has a substantially horizontal longitudinal axis 28 crosswise to axis 15, and forms part of a pneumatic circuit 29 pneumatically connecting chamber 25 and hole 20, and comprising a first portion 30 formed through casing 14, and a second portion 31 formed through plate 18. Cavity 27 is engaged in sliding manner by a slide 32, which is housed coaxially with axis 28 inside cavity 27, and is normally maintained in a position (Figures 1 and 3) opening circuit 29 by means of a spring 33 fitted to slide 32 and interposed between slide 32 and plate 18.

Together with plate 18, slide 32 defines a variable-volume chamber 34, which is substantially coaxial with axis 28 and communicates pneumatically with hole 22, and therefore with portion 21, by means of a pneumatic conduit 35 formed partly through plate 18 and partly through casing 14.

In actual use, compressed air is fed from source 4 to hole 20, and then both to chamber 25, along circuit 29, and to chamber 26, which continuously communicates pneumatically with hole 20 by means of a pneumatic conduit 36 formed through casing 14 and connected to portion 30.

Since chamber 25 has a larger cross section than chamber 26, slide 24 is moved into a lowered position (Figure 3) opening circuit 3, and in which hole 20 and portion 19 are connected pneumatically both to portion 21 and hole 22, and to conduit 35 and chamber 34.

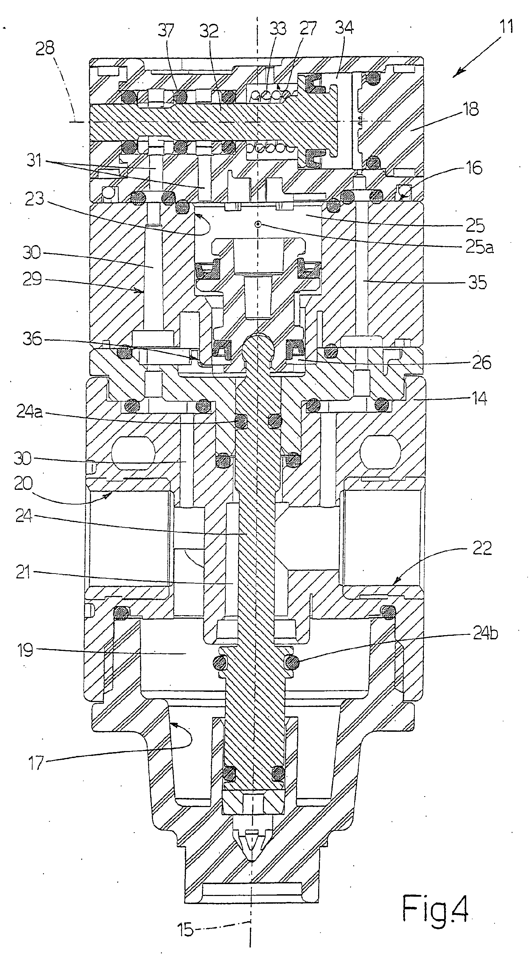

In this connection, it should be pointed out that spring 33 is so calibrated than, when slide 24 is in the lowered open position, the force exerted by spring 33 on slide 32 is always less than the force exerted on slide 32 in the opposite direction by the compressed air in chamber 34, so that slide 32 is moved into a position (Figure 4) closing circuit 29, and in which the outer surface of slide 32 contacts a sealing ring 37 coaxial with axis 28; compressed-air supply to chamber 25 is cut off; and chamber 25 is exhausted externally through a radial exhaust hole 25a extending through casing 14.

Compressed-air supply to chamber 25 being cut off, the compressed air in chamber 26 moves slide 24 into a raised position (Figure 1) closing circuit 3, and in which holes 20 and 22 are isolated pneumatically from each other by the interposition of a sealing ring 24b fitted to slide 24.

When slides 24 and 32 are set to the closed positions cutting off compressed-air supply to hole 22 and chamber 34, the newly-supplied compressed air expands along portion 7 into tire 2, the pressure at conduit 35 and chamber 34 falls, spring 33 moves slide 32 back into the position (Figure 1) opening circuit 29, and valve 11 repeats the above operating sequence.

Valve 11 therefore operates in pulsating manner, i.e. supplies compressed air in a succession of feed pulses - during which slide 24 is set to the lowered open position to feed compressed air to tire 2 - alternating with corresponding feed stops - during which slide 24 is set to the raised closed position cutting off compressed-air supply to tire 2.

In this connection, it should be pointed out that spring 33 is so calibrated that, when slide 24 is set to the raised closed position, the force exerted by spring 33 on slide 32 is always greater than the force exerted on slide 32 in the opposite direction by the pressure in chamber 34 before a given set value is reached in tire 2 and portion 7, but is less than the force exerted on slide 32 by the pressure in chamber 34 when the given set value is reached in tire 2 and portion 7.

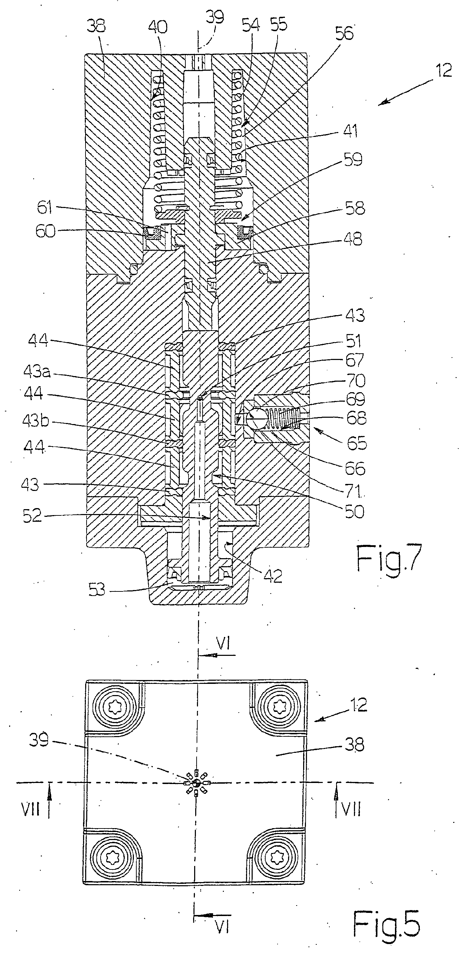

With reference to Figures 1, 5 and 6, valve 12 comprises a substantially parallelepiped-shaped, substantially rectangular-section casing 38, which has a vertical longitudinal axis 39 substantially parallel to axis 15, and an inner cavity 40 substantially coaxial with axis 39 and in turn comprising a wide top portion 41 and a narrow bottom portion 42. Portion 42 has a number of (in the example shown, four) sealing rings 43, which are coaxial with and arranged along axis 39, and are held in position by tubular spacers 44 with radial holes to allow the compressed air through.

Portion 42 communicates pneumatically with an inlet hole 45, which allows compressed air into valve 12, extends radially through casing 38, and is positioned coaxial with and facing hole 22; with an outlet hole 46, which allows compressed air out of valve 12, extends radially through casing 38, and is located along axis 39, on the opposite side of a first ring 43 (hereinafter indicated 43a) to hole 45; and with an exhaust hole 47 (the function of which is explained in detail later on), which extends radially through casing 38 to communicate with the outside, and is located along axis 39, on the opposite side of a second ring 43 (hereinafter indicated 43b) to hole 46.

Valve 12 also comprises a slide 48, which is substantially coaxial with axis 39, engages cavity 40 in sliding manner, and is activated, as described in detail later on, to open or close circuit 3.

The portion of slide 48 housed inside portion 42 has two annular grooves 49, 50 formed radially along the outer surface of slide 48, and extending coaxially with axis 39. Slide 48 also comprises a transverse hole 51 extending through slide 48 at groove 49 and crosswise to axis 39; and an axial conduit 52, which extends coaxially with axis 39 from hole 51, and opens outwards at a variable-volume bottom chamber 53 defined by casing 38 and slide 48.

Valve 12 also comprises a spring 54 housed inside portion 41 and interposed between slide 48 and casing 38 to normally keep slide 48 in a lowered position (Figure 1) opening circuit 3, and in which groove 49 faces ring 43a, so that hole 45 communicates with hole 46 and conduit 52, and therefore with chamber 53, and in which the outer surface of slide 48 contacts ring 43b to isolate holes 46 and 47 pneumatically.

In actual use, at each feed pulse of valve 11, compressed air is fed to hole 45, and therefore to both hole 46 and chamber 53. The compressed air inside chamber 53 raises slide 48 in opposition to spring 54, which, at the next feed stop of valve 11, restores slide 48 to the lowered open position using the fall in pressure inside chamber 53.

The upward movement of slide 48 is delayed by an oil buffer device 55 comprising two variable-volume chambers 56, 57. Chamber 56 is located over chamber 57, and both are defined inside portion 41 by an annular flange 58 extending radially outwards from the outer surface of slide 48, and communicate with each other via the interposition of a flow regulating device 59.

Device 59 comprises a cylindrical conduit 60 formed through flange 58 and parallel to axis 39; and a nonreturn valve defined by a lip seal 61, which is fitted to flange 58, is coaxial with axis 39, prevents oil flowing from chamber 56 to chamber 57 when slide 48 is raised by the air in chamber 53, and allows oil to flow from chamber 57 to chamber 56 when slide 48 is lowered by spring 54.

Consequently, since oil only flows from chamber 56 to chamber 57 along conduit 60, and flows from chamber 57 to chamber 56 both along conduit 60 and through seal 61, slide 48 moves up relatively slowly, and down relatively fast.

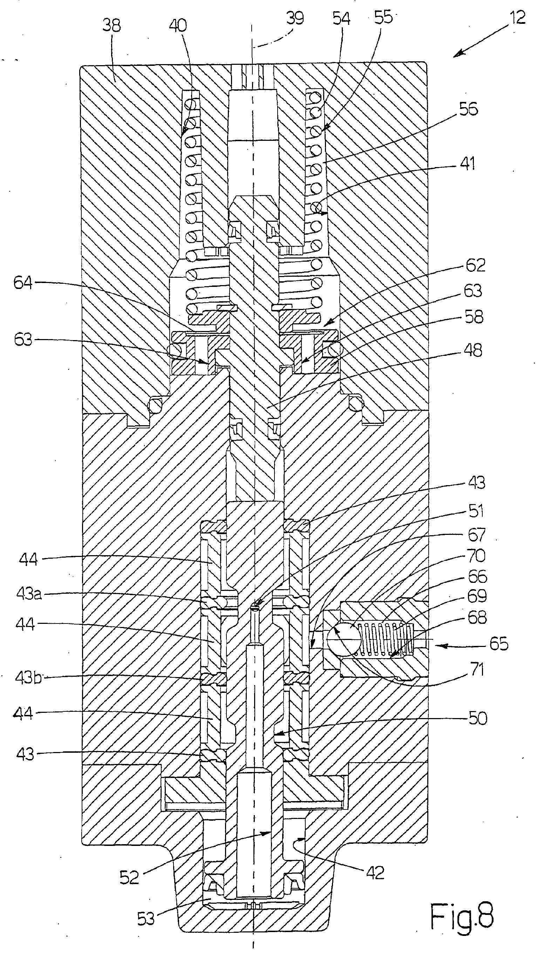

The Figure 8 variation differs from the Figure 1-6 embodiment by comprising a flow regulating device 62 having a nonreturn valve comprising a number of (in the example shown, four) holes 63 formed through flange 58 and parallel to and equally spaced about axis 39; and a deformable annular membrane 64, which extends over holes 63 and inside chamber 56, is locked axially by its inner edge to flange 58, prevents oil flowing through holes 63 from chamber 56 to chamber 57 when valve 12 is moved into the closed position, and allows oil to flow through holes 63 from chamber 57 to chamber 56 when valve 12 is moved into the open position.

Device 62 also comprises a conduit (not shown), which is identical with conduit 60, extends through flange 58, parallel to axis 39, is located between two adjacent holes 63, and communicates with chamber 56 through an opening (not shown) formed through membrane 64.

In the case of device 62, therefore, the oil flow section from chamber 56 to chamber 57 is again smaller than that from chamber 57 to chamber 56.

In connection with the above, it should be pointed out that flow regulating devices 59 and 62 may be replaced with any type of device for forming different oil flow sections from chamber 56 to chamber 57 and from chamber 57 to chamber 56.

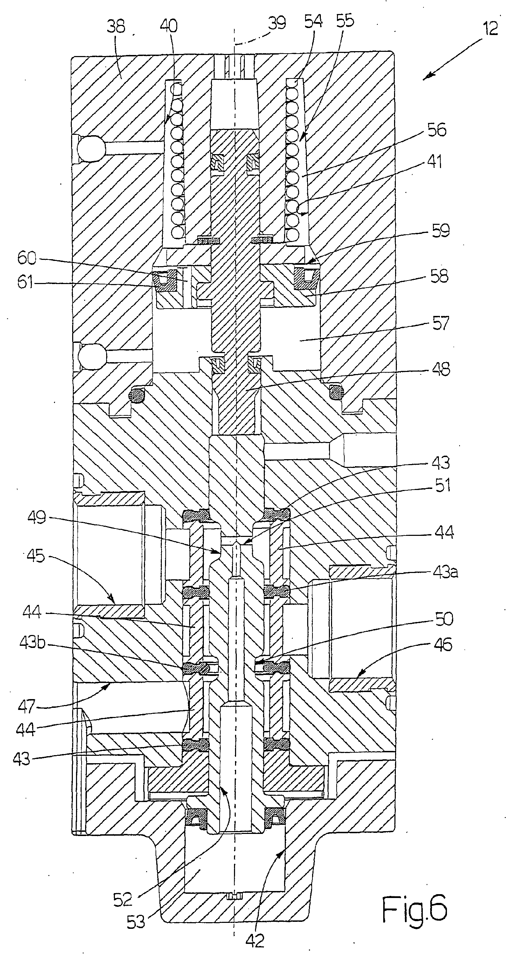

In the event of a malfunction of valve 11, i.e. in the event the duration of a feed pulse of valve 11 exceeds a given value, the force exerted by the compressed air inside chamber 53 moves slide 48 upwards into a raised position (Figure 6) closing circuit 3, and in which the outer surface of slide 48 contacts ring 43a to cut off compressed air supply to hole 46, and to only allow compressed air supply to conduit 52 and chamber 53.

In connection with the above, it should be pointed out that:
malfunctioning of valve 11 may be caused by failure of rings 24a, 24b or 37, or by clogging of conduit 35; and
the duration of each feed pulse may vary alongside a variation in pressure in portion 7 of circuit 3.

With reference to Figure 6, when slide 48 is set to the raised closed position, groove 50 is positioned facing ring 43b, and connects holes. 46 and 47 pneumatically to exhaust the compressed air trapped in portion 7 of circuit 3.

In the event of a malfunction of feed valve 11, safety valve 12 therefore provides for cutting off compressed-air supply to tire 2, exhausting the compressed air trapped in portion 7 and tire 2 when valve 12 is closed, and therefore obtaining a relatively user-safe system 1.

With reference to Figures 7 and 8, valve 12 also comprises a maximum-pressure valve 65, in turn comprising a conduit 66, which is formed through casing 38, crosswise to axis 39, is located between rings 43a and 43b, and comprises a narrow portion 67 communicating with portion 42 of cavity 40, and a wide portion 68 communicating with the outside and housing a spring 69, and a ball 70 pushed by spring 69 on to an annular conical seat 71 connecting portions 67 and 68.

Spring 69 is calibrated to push ball 70 on to seat 71, and so close conduit 66, with a force which is always less than that exerted in the opposite direction on ball 70 by the pressure in portion 42 when feed valve 11 is open, but which is greater than the force exerted on ball 70 by the pressure reached in portion 42 when feed valve 11 is closed.

In other words, spring 69 is calibrated to open maximum-pressure valve 65 at a pressure greater than the calibrated pressure of spring 33, but lower than the supply pressure of source 4.

Operation of maximum-pressure valve 65 will now be described as of the instant in which both source 4 and gun 8 are deactivated.

When source 4 is activated, valve 11 feeds a first compressed-air pulse to portion 9. If the volume of portion 9 is less than the minimum value required to ensure sufficient expansion of the compressed air inside portion 9, the pressure in portion 9, portion 42, and, therefore, in chamber 53 assumes a value approximately equal to but no greater than the supply value, and, in the absence of maximum-pressure valve 65, moves slide 48 into the raised closed position to connect outlet hole 46, and therefore portion 9, to exhaust hole 47. Consequently, when gun 8 is activated by the user, portion 9 contains no compressed air for supply to tire 2, and safety valve 12 is closed, thus disabling unit 5.

Maximum-pressure valve 65, on the other hand, prevents safety valve 12 from closing when gun 8 is deactivated and the volume of portion 9 is less than said minimum value.

That is, since conduit 66 faces inside portion 42, between rings 43a and 43b, during the feed pulse of valve 11, both outlet hole 46 and conduit 66 communicate with inlet hole 45. When the pressure in portion 9 exceeds the calibrated value of valve 65, valve 65 opens to exhaust the compressed air and reduce the pressure in portion 9 to a value approximately equal to said calibrated value. Obviously, spring 69 must be calibrated to ensure that, when gun 8 is deactivated and the volume of portion 9 is less than said minimum value, maximum-pressure valve 65 opens before safety valve 12 closes.

## Claims

1. A unit for supplying a pressurized gas to a user device (2), in particular a tire (2); the unit comprising a feed valve (11) connectable to a source (4) of said pressurized gas, and which operates in pulsating manner to feed the pressurized gas in pulses to said user device (2) ; and being **characterized by** also comprising a safety valve (12) connected pneumatically to said feed valve (11) to cut off supply of said pressurized gas to said user device (2) as a function of the duration of each feed pulse.

2. A unit as claimed in Claim 1, wherein the unit is located along a pneumatic circuit (3) extending between said source (4) and said user device (2) to supply said pressurized gas in a given direction (13); said feed valve and said safety valve (11, 12) being arranged successively in that order and in said direction (13) along said pneumatic circuit (3).

3. A unit as claimed in Claim 2, wherein said safety valve (12) is movable between an open position and a closed position respectively opening and closing said pneumatic circuit (3); buffer means (55) being provided to delay the movement of the safety valve 812) into said closed position.

4. A unit as claimed in Claim 3, wherein said buffer means (55) comprise two variable-volume chambers (56, 57); a fluid which flows between said chambers (56, 57) as said safety valve (12) moves between said open and closed positions; and a flow regulating device (59; 62) for controlling fluid flow between said chambers (56, 57).

5. A unit as claimed in Claim 4, wherein said flow regulating device (59; 62) comprises a conduit (60) connecting said chambers (56, 57) and permitting flow of said fluid to and from each of said chambers (56, 57); and nonreturn valve means (61; 63, 64) for preventing flow of said fluid between said chambers (56, 57) as said safety valve (12) moves from said open position to said closed position.

6. A unit as claimed in any one of the foregoing Claims, wherein said safety valve (12) comprises a cavity (40) having a given longitudinal axis (39), an inlet (45) connected pneumatically to said feed valve (11), and an outlet (46) connected pneumatically to said user device (2) ; said inlet (45) and said outlet (46) being offset axially along said axis (39), and communicating with said cavity (40).

7. A unit as claimed in Claim 6, wherein said safety valve (12) also comprises a slide (48) which engages said cavity (40) in sliding manner to move between an open position, in which said inlet (45) and said outlet (46) communicate pneumatically with each other, and a closed position, in which said inlet (45) and said outlet (46) are isolated pneumatically from each other.

8. A unit as claimed in Claim 7, wherein said safety valve (12) comprises first thrust means (51, 52, 53) for moving said slide (48) from said open position to said closed position; and second thrust means (54) for moving the slide (48) from said closed position to said open position.

9. A unit as claimed in Claim 8, wherein said second thrust means (54) are elastic thrust means for normally maintaining said slide (48) in said open position.

10. A unit as claimed in Claim 8 or 9, wherein said first thrust means (51, 52, 53) comprise a further variable-volume chamber (53) defined by said slide (48) and said cavity (40); and a pneumatic conduit (51, 52) formed through said slide (48) and communicating with said further chamber (53); said pneumatic conduit (51, 52) communicating with said inlet (45) when the slide (48) is in the open position, and also when the slide (48) is in the closed position.

11. A unit as claimed in any one of Claims 6 to 10, wherein said safety valve (12) also comprises first sealing means (43a) located along said axis (39), between said inlet (45) and said outlet (46), and which pneumatically isolate said inlet (45) and said outlet (46) when said slide (48) is in the closed position.

12. A unit as claimed in any one of Claims 6 to 11, wherein said safety valve (12) also comprises an exhaust (47) connected pneumatically to the outside and to said cavity (40), and located along said axis (39), on the opposite side of said outlet (46) to said inlet (45); second sealing means (43b) being located along said axis (39), between said outlet (46) and said exhaust (47), to isolate the outlet (46) and the exhaust (47) pneumatically when said slide (48) is in the open position.

13. A unit as claimed in any one of Claims 7 to 12, wherein said safety valve (12) also comprises a maximum-pressure valve (65) connected pneumatically to said cavity (40) and to the outside; said maximum-pressure valve (65) being located along said axis (39) to communicate with said inlet (45) when the safety valve (12) is in said open position.
